(19) Europäisches Patentamt

European Patent Office

Office européen des brevets

(11) **EP 1 085 771 A2**

(12) **EUROPÄISCHE PATENTANMELDUNG**

(43) Veröffentlichungstag:
21.03.2001 Patentblatt 2001/12

(51) Int. Cl.$^7$: **H04Q 7/22**

(21) Anmeldenummer: **00120597.0**

(22) Anmeldetag: **20.09.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.09.1999 DE 19945061**
**30.10.1999 DE 19952076**
**30.11.1999 DE 19957655**

(71) Anmelder:
• **Philips Corporate Intellectual Property GmbH**
**52064 Aachen (DE)**
Benannte Vertragsstaaten:
**DE**

• **Koninklijke Philips Electronics N.V.**
**5621 BA  Eindhoven (NL)**
Benannte Vertragsstaaten:
**FR GB**

(72) Erfinder:
**Herrmann, Christoph, Dr.**
**Habsburgerallee 11, 52064 Aachen (DE)**

(74) Vertreter:
**Volmer, Georg, Dipl.-Ing. et al**
**Philips Corporate Intellectual Property GmbH,**
**Habsburgerallee 11**
**52064 Aachen (DE)**

(54) **Drahtloses Netzwerk mit mehreren Zugriffswahrscheinlichkeiten für den Zugriff auf einen RACH-Kanal**

(57)     Die Erfindung bezieht sich auf ein drahtloses Netzwerk mit mindestens einer Basisstation und mehreren zugeordneten Terminals zum Austausch von Nutz- und Steuerdaten, die jeweils zur Aussendung einer von einer ersten Zugriffswahrscheinlichkeit abhängigen Reservierungs-Meldung zur Zuweisung von Übertragungskapazität für wenigstens ein Datenpaket an die zugeordnete Basisstation vorgesehen sind. Das weitere Aussenden einer von der Basisstation wenigstens einmal empfangenen Reservierungs-Meldung ist von wenigstens einer weiteren Zugriffswahrscheinlichkeit abhängig.

FIG. 1

EP 1 085 771 A2

**Beschreibung**

Die Erfindung bezieht sich auf ein drahtloses Netzwerk mit mindestens einer Basisstation und mehreren zugeordneten Terminals zum Austausch von Nutz- und Steuerdaten, die jeweils zur Aussendung einer von einer ersten Zugriffswahrscheinlichkeit abhängigen Reservierungs-Meldung zur Zuweisung von Übertragungskapazität für wenigstens ein Datenpaket an die zugeordnete Basisstation vorgesehen sind.

In dem Dokument „TSG-RAN Working Group 2 (Radio layer 2 and Radio layer 3), Sophia-Antipolis, France, 16th to 20th August 1999, TS 25.321, V3.0.0 (1999-06), 3rd Generation Partnership Project (3GPP); Technical Specification Group (TSG) RAN; Working Group 2 (WG2); MAC protocol specification" wird ein MAC-Protokoll (MAC = Medium Access Protocol) für ein Funknetzwerk vorgeschlagen. Das Funknetzwerk besteht aus mehreren Funkzellen mit jeweils einer Basisstation und darin befindlichen Terminals oder Mobilstationen. Nach der Registrierung und Synchronisierung eines Terminals, sendet ein Terminal beispielsweise zur Anforderung eines Nutzkanals ein Meldungspaket (Random-Access burst) über einen kollisionsbehafteten Kanal, der als RACH-Kanal bezeichnet wird (RACH = Random Access Channel). Das Meldungspaket besteht aus einem Präambelteil (Preamble part) und einem Datenteil (Data part). Bevor ein Meldungspaket von einem Terminal zur Basisstation gesendet werden kann, wird nur durch Aussendung einer Präambel getestet, ob z.B. die Sendeleistung des Terminals ausreichend ist. Hierbei muss vor der Sendung von einem Terminal geprüft werden, ob ein von dem Terminal gebildeter Zufallswert kleiner als ein von der Basisstation dem Terminal gesendeter Zugriffswahrscheinlichkeitswert (persistency probability) ist. Falls der Zufallswert kleiner als der Zugriffswahrscheinlichkeitswert ist, darf die Präambel gesendet werden. Wenn das eine Präambel sendende Terminal innerhalb einer bestimmten Zeit keine Meldung von der Basisstation empfangen hat, wird nach einer bestimmten Zeit ein erneuter Sendeversuch mit höherer Sendeleistung gestartet. Die Sendeleistung wird bei Bedarf bis zu einem vorgegebenen Maximalwert gesteigert. Im anderen Fall erhält das Terminal entweder eine Zuteilungs- oder Ablehnungsmeldung bzw. nach Ablauf einer vordefinierten Zeit (Time-out) weder eine Zuteilungs- noch eine Ablehnungsmeldung. Im zuletzt genannten Fall hat die Basisstation beispielsweise die gesendete Präambel nicht detektieren können. Bei einer Zuteilungsmeldung kann das Terminal den Datenteil des Meldungspakets mit der eingestellten Sendeleistung abschicken. Die Basisstation sendet beispielsweise eine Ablehnungsmeldung aus, wenn für die Aussendung des Datenteils keine Kanalkapazität vorhanden ist. Bei einer Ablehnungsmeldung wird ebenfalls nach einer bestimmten Zeit ein erneuter Sendeversuch mit der ursprünglichen Anfangssendeleistung gestartet und diese dann sukzessive erhöht (power ramping). Bei einem neuen Sendeversuch muss zuerst wieder ein Zufallswert mit dem Zugriffswahrscheinlichkeitswert verglichen werden. Dieser beschriebene Zugriffsvorgang gilt für alle Terminals. Damit wird nicht unterschieden zwischen Terminals, die erstmalig versuchen ein Meldungspaket abzusetzen, und solchen, die schon eine Ablehnungsmeldung von der Basisstation erhalten haben, sowie solchen, die weder Zuteilungs- noch Ablehnungsmeldung empfangen haben. Dies kann im Netzwerk zu inakzeptablen Wartezeiten für die Sendung von Meldungspaketen führen.

Der Erfindung liegt die Aufgabe zugrunde, ein drahtloses Netzwerk zu schaffen, bei dem die Wartezeit für die Sendung von Meldungspaketen verringert ist.

Die Aufgabe wird durch ein drahtloses Netzwerk der eingangs genannten Art dadurch gelöst,
dass das weitere Aussenden einer von der Basisstation wenigstens einmal empfangenen Reservierungs-Meldung von wenigstens einer zweiten Zugriffswahrscheinlichkeit abhängig ist.

Unter dem erfindungsgemäßen drahtlosen Netzwerk ist ein Netzwerk mit mehreren Funkzellen zu verstehen, in denen jeweils eine Basisstation und mehrere Terminals Steuer- und Nutzdaten drahtlos übertragen. Eine drahtlose Übertragung dient zur Übertragung von Informationen z.B. über Funk-, Ultraschall- oder Infrarotwege.

Erfindungsgemäß werden unterschiedliche Zugriffswahrscheinlichkeiten verwendet, um den Zugriffstyp individuell anpassen zu können. Hierbei werden Reservierungs-Wünsche also unterschiedlich behandelt. Ein Datenpaket enthält eine Präambel und einen Datenteil und sendet eine Präambel als ein Reservierungs-Wunsch eines Terminals aus. Eine Zuweisung von Übertragungskapazität bedeutet, dass ein Terminal einen Datenteil eines Meldungspakets über den RACH-Kanal übertragen kann. Ein Terminal ist nach Empfang einer Zuteilungsmeldung zur Aussendung des Datenteils des Datenpakets vorgesehen.

Wenn ein Terminal nach Ablauf einer definierten Zeit nach Absenden eines Datenteils erstmals wieder eine Präambel absetzt, liegt ein Zugriffstyp erster Art vor. Ein Zugriffstyp zweiter Art bedeutet, dass ein Terminal nach Absenden einer Präambel eine Ablehnungsmeldung erhalten hat. Bei einem Zugriffstyp dritter Art sendet ein Terminal innerhalb der definierten Zeit nach Absenden eines Datenteils wieder eine Präambel. Wenn ein Terminal nach Absenden einer Präambel und schrittweisen Erhöhung der Sendeleistung bis zur Maximalsendeleistung (power ramping) weder eine Zuteilungs- noch eine Ablehnungsmeldung erhalten hat, liegt ein Zugriffstyp vierter Art vor. Hierbei werden die Zugriffswahrscheinlichkeiten für die Zugriffstypen erster, dritter und vierter Art periodisch über den Broadcast- oder Verteilkanal an alle Terminals gesendet, während die Zugriffswahrscheinlichkeit für den Zugriffstyp zweiter Art nur dann, wenn eine Ablehnungsmeldung verschickt wurde, über den Broadcast- oder Verteilkanal an alle Terminals gesendet wird. Im letzten Fall ist die Ablehnungsmeldung an die jeweils abgelehnte Präambel gebunden, so dass die Zugriffswahrscheinlichkeit für den Zugriffstyp zweiter Art nach Präambeln unterschiedlich bestimmt sein kann. Hiermit wird insbesondere die Wartezeit gegenüber den bekannten drahtlosen Netzwerken erhöht.

Alternativ kann nur nach Empfang einer Ablehnungsmeldung die Basisstation einen Faktor über den Broadcast- oder Verteilkanal an das Terminal senden. Aus dem empfangenen Faktor und der ersten Zugriffswahrscheinlichkeit bildet das Terminal die zweite Zugriffswahrscheinlichkeit. Im letztgenannten Fall ist die Ablehnungsmeldung an die jeweils abgelehnte Präambel gebunden, so dass die Zugriffswahrscheinlichkeit für den Zugriffstyp zweiter Art nach Präambeln unterschiedlich bestimmt sein kann.

Die Erfindung bezieht sich auch auf ein Terminal in einem drahtlosen Netzwerk mit mindestens einer Basisstation und weiteren zugeordneten Terminals zum Austausch von Nutz- und Steuerdaten. Das Terminal ist zur Aussendung einer von einer ersten Zugriffswahrscheinlichkeit abhängigen Reservierungs-Meldung an die Basisstation zuständig. Mit der Reservierungs-Meldung wird Übertragungskapazität für wenigstens ein Datenpaket angefordert. Das weitere Aussenden einer von der Basisstation wenigstens einmal empfangenen Reservierungs-Meldung von dem Terminal ist von einer zweiten Zugriffswahrscheinlichkeit abhängig.

Ausführungsbeispiele der Erfindung werden nachstehend anhand der Fig. näher erläutert. Es zeigen:

Fig. 1 ein drahtloses Netzwerk mit mehreren Basisstationen und Terminals und

Fig. 2 bis 6 Flussablaufdiagramme zur Erläuterung der Zuweisung eines RACH-Kanals für die Übertragung eines Datenpakets von einem Terminal.

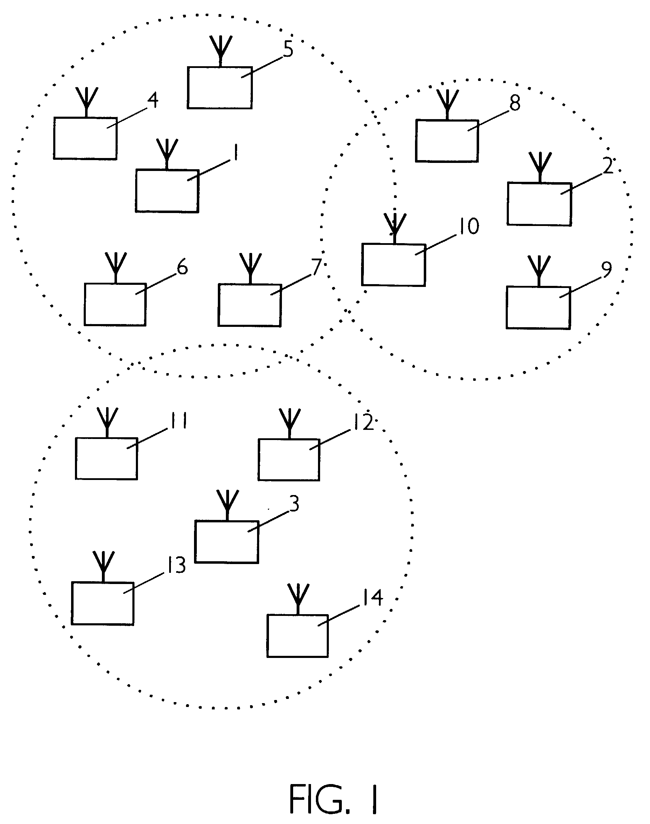

In Fig. 1 ist ein drahtloses Netzwerk, z.B. Funknetzwerk, mit mehreren Basisstationen 1 bis 3 und mehreren Terminals 4 bis 14 dargestellt. Einer Basisstation 1 bis 3 sind bestimmte Terminals 4 bis 14 zugeordnet. In dem in Fig. 1 dargestellten Beispiel sind der Basisstation 1 die Terminals 4 bis 7, der Basisstation 2 die Terminals 8 bis 10 und der Basisstation 3 die Terminals 11 bis 14 zugewiesen. Ein Steuerdatenaustausch findet zumindest zwischen der Basisstation und den Terminals statt. Ein Nutzdatenaustausch kann sowohl zwischen der Basisstation und den Terminals als auch direkt zwischen den Terminals durchgeführt werden. In beiden Fällen wird von der Basisstation die Verbindung zur Übertragung von Nutzdaten aufgebaut. Die Terminals 4 bis 14 sind in der Regel Mobilstationen, die von einer fest installierten Basisstation 1 bis 3 gesteuert werden. Eine Basisstation 1 bis 3 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_C$ bezeichnet. $1/T_C$ ist die Chiprate. Die Multiplikation bzw. Modulation des Datensignals mit dem pseudo-zufälligen Rechtecksignal hat eine Spreizung des Spektrums um den Spreizungsfaktor $N_C = T/T_C$ zur Folge, wobei T die Dauer eines Rechteckimpulses des Datensignals ist.

Nutzdaten und Steuerdaten zwischen wenigstens einem Terminal und einer Basisstation werden über von der Basisstation vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Basisstation zu den Terminals wird als Downlink und von den Terminals zur Basisstation als Uplink bezeichnet. Somit werden über Downlink-Kanäle Daten von der Basisstation zu den Terminals und über Uplink-Kanäle Daten von Terminals zur Basisstation gesendet. Beispielsweise kann ein Downlink-Steuerkanal vorgesehen sein, der benutzt wird, um von der Basisstation Steuerdaten vor einem Verbindungsaufbau an alle Terminals zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal zur Basisstation kann beispielsweise ein von der Basisstation zugewiesener Uplink-Steuerkanal verwendet werden, auf den aber auch andere Terminals zugreifen können. Ein Uplink-Kanal, der von mehreren oder allen Terminals benutzt werden kann, wird als gemeinsamer Uplink-Kanal (common uplink channel) bezeichnet. Nach einem Verbindungsaufbau z.B. zwischen einem Terminal und der Basisstation werden Nutzdaten über einen Downlink- und ein Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Zur Einbindung eines Terminals zu einer Basisstation ist ein kollisionsbehafteter Kanal zuständig, der im folgenden als signalisierter RACH-Kanal (RACH = Random Access Channel) bezeichnet wird. Über einen solchen signalisierten RACH-Kanal können auch Datenpakete übertragen werden.

Damit Nutzdaten zwischen der Basisstation und einem Terminal ausgetauscht werden können, ist es erforderlich, dass das Terminal mit der Basisstation synchronisiert wird. Beispielsweise ist aus dem GSM-System (GSM = Global System for Mobile communication) bekannt, in welchem eine Kombination aus FDMA- und TDMA-Verfahren benutzt wird, dass nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden. Aus Vereinfachungsgründen wird im folgenden von einem Rahmen ausgegangen, der als Referenzrahmen bezeichnet wird. Dieser Referenzrahmen kann beispielsweise der Rahmen mit einer Dauer von 10 ms im UMTS-System (UMTS = Universal Mobile Telecommunication System) sein.

Um eine Rahmensynchronisation durchführen zu können, müssen alle Terminals auf die Basisstation mit Hilfe von Impulsen, die von der Basisstation ausgesendet werden, synchronisiert werden. Falls kein Code-Spreiz-Verfahren (z.B. CDMA-Verfahren) angewendet wird (z.B. wird ein TDMA-Verfahren verwendet), entspricht die Impulsdauer genau dem für die Sendung eines Bits benötigten Zeitintervall. Bei Anwendung eines Code-Spreiz-Verfahrens entspricht die Impulsdauer einem Chipintervall. Ein Bitintervall entspricht dabei mehreren Chipintervallen. Zur Rahmensynchronisation ist die Sendung einer speziellen Impulssequenz durch die Basisstation erforderlich. Der Startzeitpunkt der Impulssequenz entspricht dem Startzeitpunkt eines Rahmens.

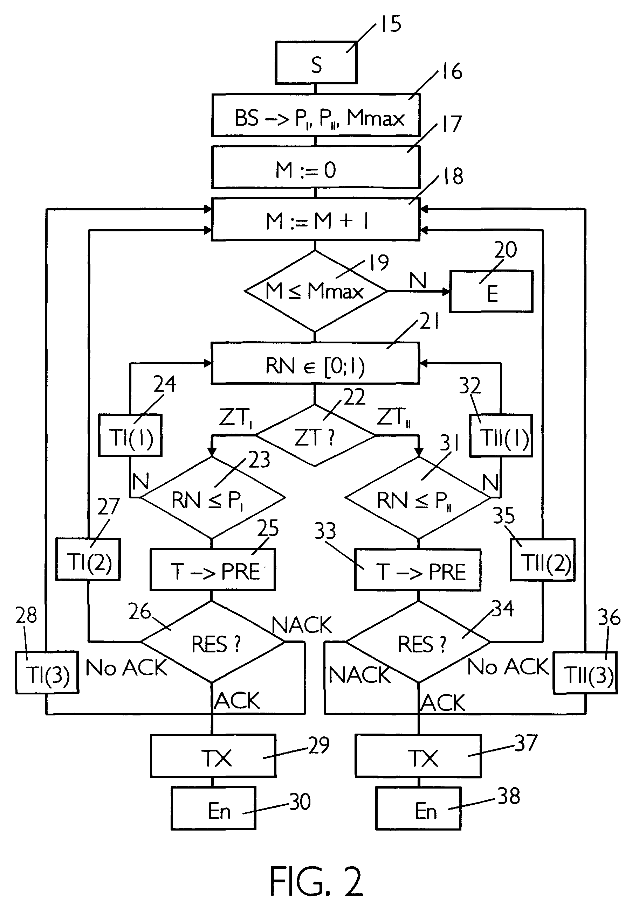

Wenn ein Terminal nach der Synchronisierung, ein Meldungspaket (Random-Access burst), das aus einem Präambelteil (Preamble part) und einem Datenteil (Data part) besteht, über einen kollisionsbehafteten Kanal, der als RACH-Kanal bezeichnet wird, (RACH = Random Access Channel) absetzen möchte, werden im Terminal verschiedene Schritte durchlaufen, die ein Flussablaufdiagramm in Fig. 2 angibt. Block 15 in der Fig. 2 zeigt den Start des Flussablaufdiagramms an. Der Empfang verschiedener Steuerparameter im Terminal (BS → $P_I$, $P_{II}$, Mmax) von der zugeordneten Basisstation ist in Block 16 dargestellt. Beispielsweise sendet die Basisstation zwei Zugriffswahrscheinlichkeitswerte $P_I$ und $P_{II}$ und einen Maximalwert Mmax, der die maximale Anzahl von aufeinanderfolgenden Zugriffsversuchen auf den RACH-Kanal vorgibt. Zuerst wird eine Zählvariable M zu Null gesetzt (Block 17). Diese Zählvariable M bezeichnet die Anzahl der schon gestarteten aufeinanderfolgenden Sendeversuche des Terminals.

Der nächste Schritt im Flussablaufdiagramm führt zu einer Schleife. Den Schleifenanfang kennzeichnet ein Block 18, in dem die Zählvariable M inkrementiert wird. Dann wird in Block 19 überprüft, ob die Zählvariable M kleiner oder gleich dem Maximalwert Mmax ist. Wenn dies nicht der Fall ist, ergibt sich ein erstes Schleifenende (Block 20). Block 20 gibt einen Fehler E an. Im anderen Fall (Block 21) entnimmt das Terminal einen Zufallswert RN (RN ∈ [0, 1)) aus einem nicht näher dargestellten Zufallsgenerator.

Die Schleife teilt sich dann nach einer Abfrage in einem Block 22 in zwei Zweige auf. Block 22 prüft, um welchen Zugriffstyp ZT es sich handelt. Ein Zugriffstyp $ZT_I$ erster Art liegt vor, wenn das Terminal zum ersten Mal versucht eine Präambel abzusetzen oder wenn der Empfang einer zuvor abgesetzten Präambel nicht von der Basisstation bestätigt worden ist. Im anderen Fall liegt ein Zugriffstyp $ZT_{II}$ zweiter Art vor. Damit hat das Terminal eine Ablehnungsmeldung von der Basisstation bereits erhalten. Die Ablehnungsmeldung wird dann von der Basisstation gesendet, wenn für die Aussendung des Datenteils beispielsweise keine Kanalkapazität vorhanden ist. Wenn es sich um den Zugriffstyp $ZT_I$ erster Art handelt, wird im nächsten Schritt (Block 23) der Zufallswert RN mit dem Zugriffswahrscheinlichkeitswert $P_I$ verglichen (In diesem Fall gehört das Terminal dem Zugriffstyp erster Art an.). Ist der Zufallswert RN größer als der Zugriffswahrscheinlichkeitswert $P_I$, kann das Terminal die Präambel nicht senden und startet nach einer Wartezeit TI(1) (Block 24) wieder mit dem in Block 21 angegebenen Schritt. Im anderen Fall (Block 25) darf das Terminal die Präambel absetzen (T → PRE). Das Terminal überprüft (Block 26), ob innerhalb einer bestimmten Zeit eine Ablehnungsmeldung oder eine Zuteilungsmeldung von der Basisstation empfangen worden ist (RES?). Ist keine Meldung empfangen worden (No ACK), wird nach einer Wartezeit TI(2) (Block 27) wieder mit dem in Block 18 angegebenen Schritt fortgesetzt (Schleifenanfang). Wird eine Ablehnungsmeldung empfangen (NACK), wird nach einer Wartezeit TI(3) (Block 28) ebenfalls mit dem Schleifenanfang fortgesetzt. Bei einer Zuteilungsmeldung ACK wird, wie in Block 29 dargestellt, der Datenteil des Meldungspakets gesendet (TX). Damit endet der erste Zweig der Schleife (Block 30, En).

Im zweiten Zweig der Schleife werden die gleichen Schritte mit anderen Parametern durchlaufen. In Block 31 wird nach der Feststellung, dass der Zugriffstyp $ZT_{II}$ zweiter Art vorliegt, der Zufallswert RN mit der Zugriffswahrscheinlichkeitswert $P_{II}$ verglichen (In diesem Fall gehört das Terminal dem Zugriffstyp zweiter Art an.). Ist der Zufallswert größer als der Zugriffswahrscheinlichkeitswert $P_{II}$ wird nach einer Wartezeit TII(1) (Block 32) weiter mit Block 21 verfahren. Sonst wird die Präambel (Block 33, T → PRE) gesendet. Erhält das Terminal nach einer bestimmten Zeit keine Meldung (Block 34, No ACK) wird nach einer Wartezeit TII(2) (Block 35) mit der Schleife wieder begonnen. Bei einer Ablehnungsmeldung (NACK) wird ebenfalls nach einer Wartezeit TII(3) (Block 36) die Schleife am Schleifenanfang fortgesetzt. Wenn die Zuteilungsmeldung (ACK) vorliegt, wird der Datenteil des Meldungspakets (Block 37, TX) ausgesendet und die Schleife ist beendet (Block 38, En).

Die Basisstation empfängt Präambeln innerhalb eines Zugriffs-Zeitraums, der einen Teil eines Referenzrahmens sein kann.

Nicht in jedem Fall treten sowohl Zugriffe erster als auch zweiter Art auf. Die Zugriffswahrscheinlichkeiten $P_I$ und $P_{II}$ sind über folgende Formeln definiert:

PX1 bestimmt $P_I$, wenn nur Zugriffe erster Art erfolgen.

$$PX1 = \sum_{\ell=K_p+1}^{UE_{max}} \binom{UE_{max}}{\ell} p_I^{\ell}(1-p_I)^{UE_{max}-\ell} \leq REF$$

PX2 bestimmt $P_I$, wenn auch Zugriffe zweiter Art erfolgen. PX3 bestimmt $P_{II}$, wenn auch Zugriffe zweiter Art erfolgen.

$$PX2 = \sum_{\ell=K_p+1-C_{NA}}^{UE_{max}} \binom{UE_{max}}{\ell} p_I^{\ell}(1-p_I)^{UE_{max}-\ell} \leq REF$$

$$PX3 =$$
$$\sum_{\ell_2=1}^{C_{NA}} \sum_{\ell_1=K_p+1-\ell_2}^{UE_{max}-C_{NA}} \binom{C_{NA}}{\ell_2} p_{II}^{\ell_2}(1-p_{II})^{C_{NA}-\ell_2} \cdot \binom{UE_{max}-C_{NA}}{\ell_1} p_I^{\ell_1}(1-p_I)^{UE_{max}-C_{NA}-\ell_1} \leq REF$$

Hierbei bedeutet:

| $UE_{max}$ | Schätzwert für die Maximalzahl von Terminals, die gleichzeitig eine Präambel aussenden |
|---|---|
| $K_P$ | Anzahl der Präambeln, die - nach Maßgabe der im Zugriffszeitraum in der Funkzelle gegebenen Interferenzlage - gleichzeitig übertragen werden können |
| $C_{NA}$ | Anzahl der Ablehnungsmeldungen während eines Zugriffszeitraums |
| REF | Wahrscheinlichkeitswert |

Der Schätzwert $UE_{max}$ wird durch Langzeitmesssungen über die mittlere Anzahl der Ablehnungs- und Zuteilungsmeldungen pro Referenzrahmen von der Basisstation bestimmt.

Die Interferenzlage wird von der Basisstation für jeden Zugriffszeitraum ermittelt und gibt Auskunft über die Anzahl von Präambelübertragungen und Datenübertragungen, die noch mit tolerierbarer Fehlerrate zusätzlich möglich sind. Eine nicht mehr tolerierbare Fehlerrate ist gegeben, wenn beispielsweise 30 % aller übertragenen Bits fehlerhaft sind.

Der Wahrscheinlichkeitswert REF beträgt beispielsweise $10^{-6}$ und ergibt sich aus praktischen Versuchen, welche die Interferenzwirkung von Präambelübertragungen auf dedizierte Kanäle mitberücksichtigt.

In der Regel ist die Zugriffswahrscheinlichkeit $P_{II}$ größer als die Zugriffswahrscheinlichkeit $P_I$, wodurch die Zugriffe zweiter Art eine kürzere Wartezeit bis zum Absetzen des Datenteils des Meldungspakets erfahren. Damit wird ein Zugriff zweiter Art gegenüber einem Zugriff erster Art bevorzugt bzw. priorisiert. Bei einer geringen Verkehrslast in einer Funkzelle haben die Zugriffswahrscheinlichkeiten $P_I$ und $P_{II}$ in der Regel einen höheren Wert als bei einer höheren Verkehrslast.

Es kann noch ein Zugriffstyp dritter Art festgelegt werden. Dieser Typ liegt vor, wenn das Terminal eine Bestätigungsmeldung erhält. Hierfür kann auch ein Zugriffswahrscheinlichkeit (dritter Art) definiert werden. Aus Fairnessgründen kann diese Zugriffswahrscheinlichkeit dritter Art kleiner sein als die Zugriffswahrscheinlichkeiten erster und zweiter Art, weil Terminals, die eine Bestätigungsmeldung erhalten, unmittelbar danach ihr Meldungspaket absetzen können. Ein Terminal gehört dem Zugriffstyp dritter Art solange an, bis eine bestimmte vierte Wartezeit abgelaufen ist, um dann wieder dem Zugriffstyp erster Art anzugehören.

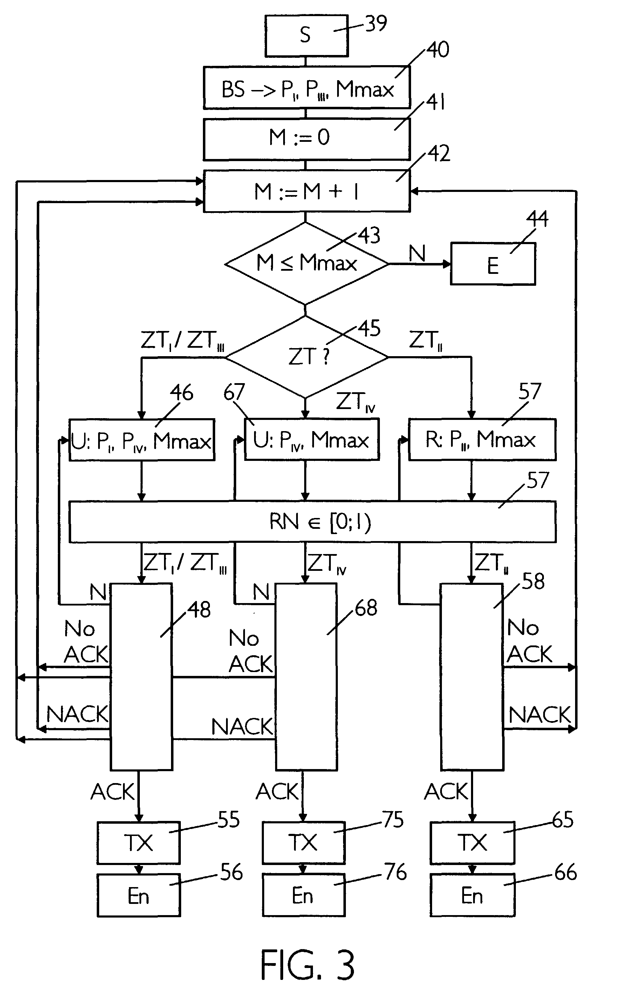

In den Fig. 3 bis 6 sind weitere Flussablaufdiagramme für vier Zugriffstypen $ZT_I$ bis $ZT_{IV}$ dargestellt. Das Flussablaufdiagramm in Fig. 3 gibt die verschiedenen Schritte im Terminal an, wenn ein Terminal nach der Synchronisierung, ein Meldungspaket (random-access burst), das aus einem Präambelteil (preamble part) und einem Datenteil (data part) besteht, über einen RACH-Kanal absetzen möchte. Block 39 in der Fig. 3 zeigt den Start (S) des Flussablaufdiagramms an. Der Empfang verschiedener Steuerparameter im Terminal (BS → $P_I$, $P_{III}$, Mmax) von der zugeordneten Basisstation ist in Block 40 dargestellt. Beispielsweise sendet die Basisstation die Zugriffswahrscheinlichkeitswerte $P_I$, $P_{III}$ und einen Maximalwert Mmax, der die maximale Anzahl von aufeinanderfolgenden Zugriffsversuchen auf den RACH-Kanal vorgibt. Zuerst wird eine Zählvariable M zu Null gesetzt (Block 41). Diese Zählvariable M bezeichnet die Anzahl der schon gestarteten aufeinanderfolgenden Sendeversuche des Terminals.

Der nächste Schritt im Flussablaufdiagramm führt zu einer Schleife. Den Schleifenanfang kennzeichnet ein Block 42, in dem die Zählvariable M inkrementiert wird. Dann wird in Block 43 überprüft, ob die Zählvariable M kleiner oder gleich dem Maximalwert Mmax ist. Wenn dies nicht der Fall ist ergibt sich ein erstes Schleifenende (Block 44). Block 44 gibt einen Fehler E an. Im anderen Fall (Block 45) wird geprüft, um welchen Zugriffstyp ZT es sich handelt. Ein Zugriffstyp $ZT_I$ erster Art liegt vor, wenn das Terminal zum ersten Mal versucht eine Präambel abzusetzen.

Wenn ein Zugriffstyp $ZT_I$ erster Art vorliegt (Block 46), dann werden die von der zugeordneten Basisstation über einen Broadcast- oder Verteil-Kanal periodisch gesendeten Parameter $P_I$ und Mmax aktualisiert (U: $P_I$, Mmax; U = Update). Eine Aktualisierung bedeutet, dass die Zuletzt von der zugeordneten Basisstation empfangenen Parameter $P_I$ und Mmax dann gültig sind. Anschließend (Block 47) entnimmt das Terminal einen Zufallswert RN (RN $\in$ [0, 1)) aus einem nicht näher dargestellten Zufallsgenerator.

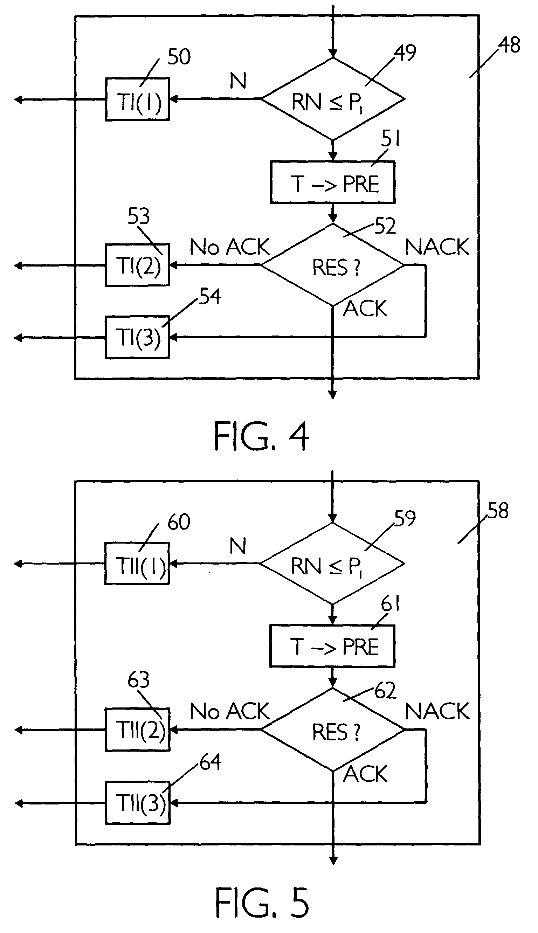

In dem vorliegenden Fall (Zugriffstyp $ZT_I$ erster Art) wird als nächstes im Block 48 der Zufallswert RN (Fig. 4: Block 49) mit dem Zugriffswahrscheinlichkeitswert $P_I$ verglichen (In diesem Fall gehört das Terminal dem Zugriffstyp $ZT_I$ erster Art an.). Ist der Zufallswert RN größer als der Zugriffswahrscheinlichkeitswert $P_I$, kann das Terminal die Präambel nicht senden und startet nach einer Wartezeit TI(1) (Fig. 4: Block 50) wieder mit dem in Block 46 angegebenen Schritt. Im anderen Fall (Fig. 4: Block 51) darf das Terminal die Präambel absetzen (T → PRE). Das Terminal überprüft anschließend (Fig. 4: Block 52), ob innerhalb einer bestimmten Zeit eine Ablehnungsmeldung oder eine Zuteilungsmeldung von der zugeordneten Basisstation empfangen worden ist (RES?). Ist keine Meldung empfangen worden (No ACK), wird nach einer Wartezeit TI(2) (Fig. 4: Block 53) wieder mit dem in Block 42 (Fig. 3) angegebenen Schritt fortgesetzt (Schleifenanfang). Wird eine Ablehnungsmeldung empfangen (NACK), wird nach einer Wartezeit TI(3) (Fig. 4: Block 54) ebenfalls mit dem Schleifenanfang fortgesetzt. Bei einer Zuteilungsmeldung (ACK) wird, wie in Block 55 (Fig. 3) dargestellt, der Datenteil des Meldungspakets gesendet (TX). Damit endet (EN) der erste Zweig der Schleife (Block 56).

Wenn in Block 45 festgestellt wird, dass ein Zugriffstyp $ZT_{II}$ zweiter Art vorliegt, werden als nächstes (Block 57) die von der zugeordneten Basisstation über einen Broadcast- oder Verteil-Kanal empfangenen Parameter $P_{II}$ und Mmax als Reaktion auf die vorher empfangene Ablehnungsmeldung (NACK) entnommen (R: $P_I$, Mmax; R = Read). Der Parameter $P_{II}$ wird anders als der Parameter $P_I$ nicht periodisch versendet, um nicht unnötig Kapazität auf dem Broadcast- oder Verteil-Kanal zu verwenden. Auf das periodische Versenden kann verzichtet werden, weil der jeweilige Wert von $P_{II}$ nur relevant wird, kurz nachdem eine Ablehnungsmeldung von der Basisstation verschickt wurde. Eine Entnahme bedeutet, dass die von dem Terminal entnommenen Parameter $P_{II}$ und Mmax erstmals oder von da an gültig sind. Wie im vorherigen Fall entnimmt das Terminal anschließend (Block 47) einen Zufallswert RN (RN $\in$ [0, 1)) aus dem nicht näher dargestellten Zufallsgenerator.

Im Block 58 wird der Zufallswert RN (Fig. 5: Block 59) mit dem Zugriffswahrscheinlichkeitswert $P_{II}$ verglichen (In diesem Fall gehört das Terminal dem Zugriffstyp $ZT_{II}$ zweiter Art an.). Ist der Zufallswert RN größer als der Zugriffswahrscheinlichkeitswert $P_{II}$, kann das Terminal die Präambel nicht senden und startet nach einer Wartezeit TII(1) (Fig. 5: Block 60) wieder mit dem in Block 57 angegebenen Schritt. Im anderen Fall (Fig. 5: Block 61) darf das Terminal die Präambel absetzen (T → PRE). Das Terminal überprüft anschließend (Fig. 5: Block 62), ob innerhalb einer bestimmten Zeit eine Ablehnungsmeldung oder eine Zuteilungsmeldung von der zugeordneten Basisstation empfangen worden ist (RES?). Ist keine Meldung empfangen worden (No ACK), wird nach einer Wartezeit TII(2) (Fig. 5: Block 63) wieder mit dem in Block 42 angegebenen Schritt fortgesetzt (Schleifenanfang). Wird eine Ablehnungsmeldung empfangen (NACK), wird nach einer Wartezeit TII(3) (Fig. 5: Block 64) ebenfalls mit dem Schleifenanfang fortgesetzt. Bei einer Zuteilungsmeldung (ACK) wird, wie in Block 65 (Fig. 3) gezeigt ist, der Datenteil des Meldungspakets gesendet (TX).

Damit endet (EN) der zweite Zweig der Schleife (Block 66).

Wenn in Block 45 festgestellt wird, dass ein Zugriffstyp ZT$_{III}$ dritter Art vorliegt, werden die entsprechenden Schritte wie bei dem Zugriffstyp ZT$_I$ erster Art durchlaufen (Blöcke 46 bis 56).

Wenn in Block 45 festgestellt wird, dass ein Zugriffstyp ZT$_{IV}$ vierter Art vorliegt, werden als nächstes (Block 67) die von der zugeordneten Basisstation über einen Broadcast- oder Verteil-Kanal periodisch gesendeten Parameter P$_{IV}$ und Mmax aktualisiert (U: P$_{IV}$, Mmax; U = Update). Wie vorher entnimmt das Terminal anschließend (Block 47) einen Zufallswert RN (RN $\in$ [0, 1)) aus dem nicht näher dargestellten Zufallsgenerator.

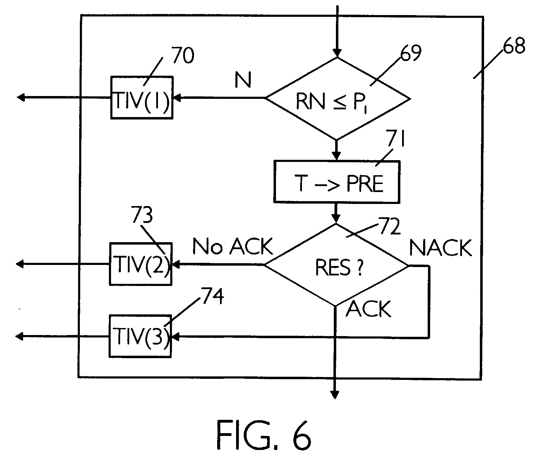

Im Block 68 wird der Zufallswert RN (Fig. 6: Block 69) mit dem Zugriffswahrscheinlichkeitswert P$_{IV}$ verglichen (In diesem Fall gehört das Terminal dem Zugriffstyp ZT$_{IV}$ vierter Art an.). Ist der Zufallswert RN größer als der Zugriffswahrscheinlichkeitswert P$_{IV}$, kann das Terminal die Präambel nicht senden und startet nach einer Wartezeit TIV(1) (Fig. 6: Block 70) wieder mit dem in Block 67 angegebenen Schritt. Im anderen Fall (Fig. 6: Block 71) darf das Terminal die Präambel absetzen (T $\rightarrow$ PRE). Das Terminal überprüft anschließend (Fig. 6: Block 72) , ob innerhalb einer bestimmten Zeit eine Ablehnungsmeldung oder eine Zuteilungsmeldung von der zugeordneten Basisstation empfangen worden ist (RES?). Ist keine Meldung empfangen worden (No ACK), wird nach einer Wartezeit TIV(2) (Fig. 6: Block 73) wieder mit dem in Block 42 angegebenen Schritt fortgesetzt (Schleifenanfang). Wird eine Ablehnungsmeldung empfangen (NACK), wird nach einer Wartezeit TIV(3) (Fig. 6: Block 74) ebenfalls mit dem Schleifenanfang fortgesetzt. Bei einer Zuteilungsmeldung (ACK) wird, wie in Block 75 (Fig. 3) gezeigt ist, der Datenteil des Meldungspakets gesendet (TX). Damit endet (EN) der dritte Zweig der Schleife (Block 76).

Die Basisstation empfängt Präambeln innerhalb eines Zugriffs-Zeitraums, der ein Teil eines Referenzrahmens sein kann. Die Basisstation legt die Zugriffswahrscheinlichkeiten P$_I$ bis P$_{IV}$ fest, die beispielsweise von der Verkehrslast, Interferenzsituation, einer hohen Auslastung für die Signalverarbeitung bestimmter Schaltungsteile der Basisstation beim Empfang von dedizierten und RACH-Kanälen und von dem Pegel beim Präambelempfang ab. Die Zugriffswahrscheinlichkeiten P$_I$ bis P$_{IV}$ können ebenfalls nach den oben angegebenen oder anderen Formeln bestimmt werden.

Es werden unterschiedliche Zugriffswahrscheinlichkeiten verwendet, um Reservierungs-Wünsche zu behandeln. Wenn das Terminal nach Ablauf einer definierten Zeit nach Absenden eines Datenteils erstmals wieder eine Präambel absetzt liegt ein Zugriffstyp erster Art vor (erste Zugriffswahrscheinlichkeit). Wenn das Terminal nach Absenden einer Präambel eine Ablehnungsmeldung erhalten hat, bedeutet dies ein Zugriffstyp zweiter Art (zweite Zugriffswahrscheinlichkeit). Wenn das Terminal innerhalb der definierten Zeit nach Absenden eines Datenteils wieder eine Präambel versendet, liegt ein Zugriffstyp dritter Art vor (dritte Zugriffswahrscheinlichkeit). Wenn das Terminal nach Absenden einer Präambel und schrittweisen Erhöhung der Sendeleistung bis zu einer Maximalsendeleistung (power ramping) weder eine Zuteilungs- oder Ablehnungsmeldung erhalten hat, liegt ein Zugriffstyp vierter Art vor (vierte Zugriffswahrscheinlichkeit). Wie schon erwähnt, werden die Zugriffswahrscheinlichkeiten für die Zugriffstypen erster, dritter und vierter Art periodisch über den Broadcast- oder Verteilkanal an alle Terminals gesendet, während die Zugriffswahrscheinlichkeit für den Zugriffstyp zweiter Art nur dann wenn eine Ablehnungsmeldung verschickt wurde über den Broadcast- oder Verteilkanal an alle Terminals gesendet wird.

Ist z.B. die Interferenz oder Verkehrslast zu hoch, sendet die Basisstation eine Ablehnungsmeldung (NACK) an mindestens ein Terminal. Über den schon erwähnten Broadcast- oder Verteilkanal wird außerdem eine Information über den Parameter P$_{II}$ für die Terminals gesendet, die nach Aussenden ihrer Präambel die Ablehnungsmeldung (NACK) erhalten haben. Die Basisstation wählt in diesem Fall die Zugriffswahrscheinlichkeit P$_{II}$ kleiner als die Zugriffswahrscheinlichkeit P$_I$. Hierbei können die Parameter P$_{II}$ für jede mit einer Ablehnungsmeldung quittierte Präambel unterschiedliche Werte aufweisen.

Die von der Basisstation festgelegte Zugriffswahrscheinlichkeit P$_{II}$ ist dagegen höher als die Zugriffswahrscheinlichkeit P$_I$, wenn eine hohen Auslastung für die Signalverarbeitung bestimmter Schaltungsteile der Basisstation beim Empfang von dedizierten und RACH-Kanälen vorliegt.

Ist der Pegel beim Präambelempfang gegenüber den übrigen Empfangspegeln unvertretbar hoch, dann setzt die Basisstation die Zugriffswahrscheinlichkeit P$_{II}$ auf einen deutlich kleineren Wert als die Zugriffswahrscheinlichkeit P$_I$, weil der zu hohe Pegel schon zu einer merklichen Empfangsstörung in der Basisstation geführt hat. Ein unvertretbar hoher Präambelempfangspegel kann vorliegen, wenn sich eine Terminal sehr nah an der Basisstation befindet.

Der Vorteil der Verwendung unterschiedlicher Zugriffswahrscheinlichkeiten zu jeweils einer Präambel liegt in der jeweils individuellen Anpassung an die jeweilige Situation für jedes Terminal und führt zu einer Reduktion der Zugriffszeit. Dadurch dass die Zugriffswahrscheinlichkeit P$_{II}$ nur nach Ausenden einer Ablehnungsmeldung (NACK) abgesetzt wird, ergibt sich eine geringere Signalisierungslast auf dem Broadcast- oder Verteilkanal. Hierbei wird aber nicht auf eine individuelle Behandlung der jeweiligen Ursachen für das Aussenden der Ablehnungsmeldung verzichtet.

Ein Ausführungsbeispiel für ein drahtloses Netzwerk kann beispielsweise das gegenwärtig diskutierte UMTS-Funkzugangsnetzwerk (UMTS Radio Access Network = UTRAN) sein. Hier können dann Zugriffstypen erster und zweiter Art verwendet werden. Die Zugriffstypen dritter und vierter Art werden in diesem Beispiel zum Zugriffstyp erster Art gezählt. Bei diesem System kann einer Basisstation ein logischer Knoten, der als Node B bezeichnet wird, und eine Funknetzwerk-Steuerung zugeordnet werden. Der logische Knoten ist für die Funkübertragung in wenigstens einer Funkzelle verantwortlich und ist über eine Schnittstelle mit der Funknetzwerk-Steuerung verbunden. Die Funknetzwerk-Steuerung ist für die für Steuerung aller am Funkverkehr beteiligten Komponenten verantwortlich und baut z.B. jeweils eine Verbindung zur Übertragung von Nutzdaten auf.

Die physikalische Schicht wird im logischen Knoten terminiert. Ablehnungsmeldungen (NACK) werden direkt von der physikalischen Schicht erzeugt und an die Terminals verschickt. In einem Rahmen gibt es insgesamt 8 Zugangs-Zeitschlitze (access slot), in denen jeweils 16 Präambeln gesendet werden können. Somit liegen pro Rahmen insgesamt 128 parallele RACH-Kanäle vor. Für jeden dieser Kanäle kann eine Ablehnungsmeldung geschickt werden. Eine Ablehnungsmeldung bezieht sich genau auf eine Präambel und den Zugangs-Zeitschlitz, in dem die Präambel geschickt wurde.

Des weiteren ist vorgesehen, Systeminformationen (z.B. Interferenzsituationen), die häufig aktualisiert werden müssen, direkt im logischen Knoten (Node B) und nicht erst in der Funknetzwerk-Steuerung (RNC) in einen Broadcast- oder Verteilkanal einzufügen. Dies ist deshalb erforderlich, weil infolge der zwischen dem logischen Knoten (Node B) und der Funknetzwerk-Steuerung (RNC) liegenden Schnittstellen zu große Verzögerungen entstehen würden. Das bedeutet, dass zeitkritische Systeminformationen nicht rechtzeitig zur Funkschnittstelle geschickt werden könnten.

Diese Möglichkeit, Systeminformationen in den Verteilkanal schon im logischen Knoten (Node B) einzufügen, wird bei der Erfindung genutzt, um im Falle einer Ablehnungsmeldung während des Rahmens n nach m weiteren Rahmen in den Verteilkanal ein Informationselement IE einzufügen, das für jede im Rahmen n abgesendete Ablehnungsmeldung den Wert der Zugriffswahrscheinlichkeit $P_{II}$ enthält. Der Wert m ist fest vorgegeben (z.B. m=2) und zwar deshalb, weil für den Verteilkanal als Übertragungszeit mindestens die Dauer von 2 Rahmen vorgesehen ist. Der Wert m kann als Teil der Systeminformation verteilt werden.

Es sind insbesondere zwei Fälle für die Zugriffswahrscheinlichkeit $P_{II}$ zu beachten. In einem ersten Fall (Fall der Priorisierung) ist die Ablehnungsmeldung geschickt worden, weil kurzzeitig vorübergehend alle Hardwareressourcen für die Verarbeitung von schon empfangenen im RACH-Kanal gesendeten Paketen in Benutzung sind. Dieser Engpass wird im nächsten oder übernächsten Rahmen wieder weggefallen sein. Die abgelehnte Präambel sollte dann gerade in diesen Rahmen übertragen werden. Die Zugriffswahrscheinlichkeit $P_{II}$ wird hierfür größer als die Zugriffswahrscheinlichkeit $P_I$ gewählt. Ein möglicher Wert für die Zugriffswahrscheinlichkeit $P_I$ wäre sogar der Wert 1.

Beim zweiten Fall (Fall der stärkeren Verzögerung) ist es in infolge ungenauer Schätzung von Datenverlusten bei Übertragungen über Uplink-Kanäle möglich, dass ein Terminal die Anfangsleistung für die Übertragung einer Präambel (Präambelleistung) zu hoch gewählt hat. In dieser Situation sollte das Terminal solange keinen weiteren Sendeversuch der Präambel durchführen, bis eine bessere Schätzung von Datenverlusten vorliegt. In diesem Fall wird die Zugriffswahrscheinlichkeit $P_{II}$ deutlich kleiner als die Zugriffswahrscheinlichkeit $P_I$ gewählt.

Zur Kodierung dieser verschiedenen Möglichkeiten wird regelmäßig mit $P_I$ zusätzlich ein Faktor $\alpha > 1$ an alle Terminals verteilt. Der Faktor $\alpha$ ist so bestimmt, dass $P_{II} = \min(\alpha P_I, 1)$ im Falle der Priorisierung einer zuvor abgelehnten Präambel und $P_{II} = P_I/\alpha$, falls nach Ablehnung einer Präambel eine Übertragung dieser Präambel länger verzögert werden soll.

Etwas mehr Gestaltungsspielraum ergibt sich, wenn für beide Fälle jeweils explizit eine zweite Zugriffswahrscheinlichkeit $P_{II}$ auf dem Broadcast- oder Verteilkanal an die Terminals gesendet wird. In diesem Falle müssen dann aber nicht zwei sondern drei Parameter verteilt werden: $P_I$, $P_{II,\,1}$ (für Priorisierung), $P_{II,\,2}$ (für stärkere Verzögerung).

Im Falte der Sendung von Ablehnungsmeldungen im Rahmen n wird m Rahmen später für jede gesendete Ablehnungsmeldung mit 4 Bit die Präambel und mit 3 Bit der Zugangs-Zeitschlitz (access slot) kodiert, auf den sich die Ablehnungsmeldung bezog. Ein weiteres Bit zeigt an, ob $P_{II,\,1}$ (für Priorisierung) oder $P_{II,\,2}$ (für stärkere Verzögerung) beim Sender der jeweiligen Präambel für den nächsten Sendeversuch dieser Präambel gelten soll.

Auf diese Weise benötigt man für die Kodierung der zu verwendenden Zugriffswahrscheinlichkeit $P_{II}$ (Zugriffstyp zweiter Art) insgesamt nur 8 Bit. Weitere Bits sind allerdings erforderlich, um das gesamte Informationselement IE zu kennzeichnen. Ist es auf Null gesetzt, so bedeutet dies, dass die gesendete Präambelleistung zu hoch war und das Terminal nur nach weiterer Reduktion der Sendeleistung erneut eine Präambel senden darf, wobei in diesem Falle $P_I$ das Senden der nächsten Präambel steuert.

## Patentansprüche

1. Drahtloses Netzwerk mit mindestens einer Basisstation und mehreren zugeordneten Terminals zum Austausch von Nutz- und Steuerdaten, die jeweils zur Aussendung einer von einer ersten Zugriffswahrscheinlichkeit abhängigen Reservierungs-Meldung zur Zuweisung von Übertragungskapazität für wenigstens ein Datenpaket an die zugeordnete Basisstation vorgesehen sind,
   dadurch gekennzeichnet,

   dass das weitere Aussenden einer von der Basisstation wenigstens einmal empfangenen Reservierungs-Meldung von wenigstens einer weiteren Zugriffswahrscheinlichkeit abhängig ist.

**2.** Drahtloses Netzwerk nach Anspruch 1,
<u>dadurch gekennzeichnet,</u>

dass das Datenpaket eine Präambel und ein Datenteil umfasst und
dass das Aussenden einer Präambel ein Reservierungs-Wunsch eines Terminals ist.

**3.** Drahtloses Netzwerk nach Anspruch 2,
<u>dadurch gekennzeichnet,</u>

dass die ein Terminal nach Empfang einer Zuteilungsmeldung zur Aussendung des Datenteils des Datenpakets vorgesehen ist.

**4.** Drahtloses Netzwerk nach Anspruch 1,
<u>dadurch gekennzeichnet,</u>

dass ein Terminal zur erstmaligen Aussendung einer Reservierungs-Meldung vorgesehen ist, wenn die von der Basisstation vorgegebene erste Zugriffswahrscheinlichkeit größer als einer im jeweiligen Terminal gebildeter Zufallswert ist und
dass ein Terminal zur Aussendung einer von der Basisstation schon wenigstens einmal empfangenen Reservierungs-Meldung vorgesehen ist, wenn die von der Basisstation vorgegebene weitere Zugriffswahrscheinlichkeit größer als einer im jeweiligen Terminal gebildeter Zufallswert ist.

**5.** Drahtloses Netzwerk nach Anspruch 1,
<u>dadurch gekennzeichnet,</u>

dass die Basisstation zur Bestimmung der ersten und zweiten Zugriffswahrscheinlichkeit in Abhängigkeit von der Verkehrslast so vorgesehen ist, dass bei einer geringen Verkehrslast die erste und zweite Zugriffswahrscheinlichkeit höher als bei einer höheren Verkehrslast sind.

**6.** Drahtloses Netzwerk nach Anspruch 1,
<u>dadurch gekennzeichnet,</u>

dass die Basisstation zur Aussendung der weiteren Zugriffswahrscheinlichkeit nur nach einer Ablehnung der Sendung eines kompletten Datenpakets vorgesehen ist.

**7.** Drahtloses Netzwerk nach Anspruch 4,
<u>dadurch gekennzeichnet,</u>

dass die Basisstation nur dann zur Aussendung einer zweiten Zugriffswahrscheinlichkeit vorgesehen ist, wenn zuvor eine Ablehnungsmeldung versandt worden ist.

**8.** Drahtloses Netzwerk nach Anspruch 4,
<u>dadurch gekennzeichnet,</u>

dass die Basisstation zur periodischen Aussendung der ersten, einer dritten und einer vierten Zugriffswahrscheinlichkeit vorgesehen ist und
dass ein Terminal zum Vergleich der ersten Zugriffswahrscheinlichkeit mit einem im jeweiligen Terminal gebildeten Zufallswert vorgesehen ist, wenn nach einem definierten Zeitraum das Terminal eine Reservierungs-Meldung wieder aussenden möchte,
dass ein Terminal zum Vergleich der dritten Zugriffswahrscheinlichkeit mit einem im jeweiligen Terminal gebildeten Zufallswert vorgesehen ist, wenn während des definierten Zeitraums das Terminal eine Reservierungs-Meldung wieder aussenden möchte, und
dass ein Terminal zum Vergleich der vierten Zugriffswahrscheinlichkeit mit einem im jeweiligen Terminal gebildeten Zufallswert vorgesehen ist, wenn ein Terminal nach einer schrittweisen Erhöhung der Sendeleistung bis zu einem Maximalwert und wiederholtem Aussenden der Reservierungs-Meldung weder eine Zuteilungsmeldung noch eine Ablehnungsmeldung erhalten hat.

9. Drahtloses Netzwerk nach Anspruch 1,
   dadurch gekennzeichnet,

   dass die Basisstation zur Aussendung eines Faktors nur nach einer Ablehnung der Sendung eines kompletten Datenpakets vorgesehen ist und
   dass ein Terminal zur Bildung der weiteren Zugriffswahrscheinlichkeit aus dem empfangenen Faktor und der ersten Zugriffswahrscheinlichkeit vorgesehen ist.

10. Basisstation in einem drahtloses Netzwerk mit mehreren zugeordneten Terminals zum Austausch von Nutz- und Steuerdaten und zur Aussendung einer von einer ersten Zugriffswahrscheinlichkeit abhängigen Reservierungs-Meldung zur Zuweisung von Übertragungskapazität für wenigstens ein Datenpaket an die Basisstation,
    dadurch gekennzeichnet,

    dass das weitere Aussenden einer von der Basisstation wenigstens einmal empfangenen Reservierungs-Meldung von wenigstens einer weiteren Zugriffswahrscheinlichkeit abhängig ist.

11. Terminal in einem drahtlosen Netzwerk mit mindestens einer Basisstation und weiteren zugeordneten Terminals zum Austausch von Nutz- und Steuerdaten und zur Aussendung einer von einer ersten Zugriffswahrscheinlichkeit abhängigen Reservierungs-Meldung zur Zuweisung von Übertragungskapazität für wenigstens ein Datenpaket an die zugeordnete Basisstation,
    dadurch gekennzeichnet,

    dass das weitere Aussenden einer von der Basisstation wenigstens einmal empfangenen Reservierungs-Meldung von wenigstens einer weiteren Zugriffswahrscheinlichkeit abhängig ist.

FIG. 1

FIG. 2

FIG. 3

## FIG. 4

```
                                    ┌─────────────┐
                                    │  49         │  48
                    50              │   RN ≤ Pᵢ   │
        ┌────────┐     N            └─────────────┘
    ←───│  TI(I) │←────────────
        └────────┘                          │
                                            ▼
                                    ┌─────────────┐
                                    │  T -> PRE   │  51
                                    └─────────────┘
        53                                  │
        ┌────────┐   No ACK                 ▼
    ←───│  TI(2) │←────────────     ┌─────────────┐
        └────────┘                  │   RES ?     │  52   NACK
                                    └─────────────┘
        54                               ACK
        ┌────────┐
    ←───│  TI(3) │←────────────
        └────────┘
```

FIG. 4

## FIG. 5

```
                                    ┌─────────────┐
                                    │  59         │  58
                    60              │   RN ≤ Pᵢ   │
        ┌────────┐     N            └─────────────┘
    ←───│ TII(I) │←────────────
        └────────┘                          │
                                            ▼
                                    ┌─────────────┐
                                    │  T -> PRE   │  61
                                    └─────────────┘
        63                                  │
        ┌────────┐   No ACK                 ▼
    ←───│ TII(2) │←────────────     ┌─────────────┐
        └────────┘                  │   RES ?     │  62   NACK
                                    └─────────────┘
        64                               ACK
        ┌────────┐
    ←───│ TII(3) │←────────────
        └────────┘
```

FIG. 5

FIG. 6